# EUROPÄISCHE PATENTSCHRIFT

(11) **EP 3 904 207 B1**
(45) Veröffentlichungstag und Bekanntmachung des Hinweises auf die Patenterteilung: **06.07.2022**
(21) Anmeldenummer: 21171396.1
(22) Anmeldetag: 30.04.2021
(51) Int. Cl.: B64D 11/00

(54) **EINBAUMODUL FÜR EIN FLUGZEUG SOWIE FLUGZEUG MIT DEM EINBAUMODUL**
BUILT-IN MODULE FOR AN AIRCRAFT AND AIRCRAFT HAVING THE BUILT-IN MODULE
MODULE INTÉGRÉ POUR UN AÉRONEF, AINSI QU'AÉRONEF DOTÉ DU MODULE INTÉGRÉ

(30) Priorität: 30.04.2020 DE 102020205485
(43) Veröffentlichungstag der Anmeldung: 03.11.2021
(73) Patentinhaber: Diehl Aviation Laupheim GmbH, 88471 Laupheim (DE)
(72) Erfinder: Tivig, Sebastian, 20144 Hamburg (DE); Schneider, Frank, 22049 Hamburg (DE)
(74) Vertreter: Diehl Patentabteilung

(56) Entgegenhaltungen:
- WO-A2-2008/104529
- DE-A1-102008 039 635
- DE-A1-102014 205 106
- DE-T2- 60 219 367
- US-B1- 8 888 043

## Beschreibung

Die Erfindung betrifft ein Einbaumodul für ein Flugzeug mit den Merkmalen des Oberbegriffs des Anspruchs 1. Ferner betrifft die Erfindung ein Flugzeug mit dem Einbaumodul.

Bei Langstreckenflügen sind Aufenthaltsräume für die Besatzung eines Flugzeuges vorgeschrieben, welche durch mindestens ein Bett in einem ruhigen Raum charakterisiert sind. Derartige Aufenthaltsräume, auch als sogenanntes Crew Rest Compartment (CRC) bekannt, können beispielsweise in einem Deckenraum oder Frachtraum des Flugzeugs verbaut sein, um den dort vorhandenen Platz effizient zu nutzen. Des Weiteren sind Schlafboxen für Passagiere bekannt, welche angrenzend zu einem Gangbereich in einer Passagierkabine des Flugzeugs angeordnet sein können.

Die Druckschrift DE 10 2014 205 106 A1 offenbart eine Schlafbox zur Installation in einem Flugzeug, mit einem Gehäuse, das zur Aufnahme einer Person geeignet ist, die sich parallel zu einer Längsachse des Gehäuses in einer liegenden Position befindet, und das im Bereich einer sich senkrecht zu der Längsachse des Gehäuses erstreckenden Frontseite eine Zugangsöffnung aufweist, und einer Befestigungseinrichtung, die dazu eingerichtet ist, die Schlafbox derart in einer Passagierkabine des Flugzeugs zu befestigen, dass sich die Längsachse des Gehäuses senkrecht zu einer Längsachse der Passagierkabine erstreckt und die Zugangsöffnung des Gehäuses an einen in der Passagierkabine vorhandenen Gang angrenzt.

Es ist Aufgabe der vorliegenden Erfindung ein Einbaumodul für ein Flugzeug zu schaffen, welches sich durch eine besonders kompakte Ausgestaltung auszeichnet.

Die Aufgabe wird durch ein Einbaumodul gemäß Anspruch 1 sowie ein Flugzeug gemäß Anspruch 11 gelöst. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Gegenstand der Erfindung ist ein Einbaumodul, welches für ein Flugzeug ausgebildet und/oder geeignet ist. Insbesondere ist das Einbaumodul als ein sogenanntes Crew Rest Compartment (CRC) ausgebildet, welches zur Unterbringung mindestens oder genau eines Besatzungs- bzw. Crewmitglieds des Flugzeugs dient. Insbesondere ist das Einbaumodul auf ein bestimmtes Flugzeug bzw. einen bestimmten Flugzeugtyp abgestimmt und/oder für dieses angepasst. Mit anderen Worten ist das Einbaumodul auf ein bestimmtes Flugzeug bzw. dessen Dimensionen und auch auf den späteren Einbau in dem Flugzeug an einem bestimmten Ort in einer bestimmten Lage hin ausgelegt bzw. konstruiert. Insbesondere ist das Flugzeug als ein Passagierflugzeug ausgebildet, wobei das Passagierflugzeug eine Flugzeugkabine aufweist, in welcher das Einbaumodul bestimmungsgemäß eingebaut und/oder einbaubar ist. Passagierflugzeuge im Sinne der vorliegenden Erfindung sind insbesondere Mittel- und Langstreckenflugzeuge.

Das Einbaumodul weist ein Modulgehäuse auf. Insbesondere weist das Modulgehäuse eine an das bestimmte Flugzeug bzw. Flugzeugtyp angepasste Geometrie und/oder Dimensionierung auf. Das Modulgehäuse weist einen Schlafraum mit einer Schlafraumfläche auf. Somit umschließt bzw. umgibt das Modulgehäuse den Schlafraum und die Schlafraumfläche. Die Schlafraumfläche entspricht insbesondere der Fläche, die von dem Modulgehäuse umschlossen wird, also einer Bodenfläche oder Grundfläche des Schlafraumes. Sie kann aber auch nur von einer Teilfläche davon gebildet sein. Insbesondere dient der Schlafraum zur abschnittsweisen Aufnahme von mindestens oder genau einer Person, welche sich in einer liegenden Position befindet. Vorzugsweise kann wahlweise der Unter- oder der Oberkörper der Person in dem Schlafraum des Modulgehäuses aufgenommen sein, wenn sich die mindestens eine Person in der liegenden Position befindet. Insbesondere weist das Modulgehäuse mehrere Gehäusewände auf, insbesondere eine Rückwand, mindestens eine Seitenwand, bevorzugt zwei Seitenwände und optional eine Vorderwand. Ferner weist das Modulgehäuse einen Gehäuseboden sowie eine Gehäusedecke auf. Die Gehäusewände teilen den Schlafraum vom restlichen Flugzeug, insbesondere der Flugzeugkabine, ab. Dabei kann der Schlafraum und damit auch die Schlafraumfläche durch die Gehäusewände, insbesondere mindestens eine Seitenwand, vorzugsweise zwei Seitenwände und eine Rückwand des Modulgehäuses begrenzt sein. Insbesondere ist die Schlafraumfläche rechteckig. Beispielsweise sind die Gehäusewände als Sandwich-Paneele ausgebildet.

Das Modulgehäuse weist eine Zugangsöffnung auf, wobei der Schlafraum über die Zugangsöffnung zugänglich, insbesondere durch eine Person betretbar ist. Insbesondere ist die Zugangsöffnung frontseitig, insbesondere an einer der Rückwand gegenüberliegenden Vorderseite, an dem Modulgehäuse angeordnet. Die Zugangsöffnung erstreckt sich vorzugsweise über die gesamte Vorderseite des Modulgehäuses, sodass das Modulgehäuse bzw. der Schlafraum von der Vorderseite frei zugänglich ist. Alternativ kann sich die Zugangsöffnung jedoch auch abschnittsweise an der Vorderseite erstrecken, wobei die Zugangsöffnung ausreichend groß ist, um der mindestens einen Person den Zugang in bzw. aus den Schlafraum zu ermöglichen. Die Vorderseite des Modulgehäuses wird dann durch eine Vorderwand, welche sich abschnittsweise an der Vorderseite erstreckt und die Zugangsöffnung gebildet. Die Vorderwand kann auch mehrere Abschnitte umfassen. Insbesondere erstreckt sich die Zugangsöffnung zwischen zwei Abschnitten der Vorderwand. Vorzugsweise ist das Einbaumodul, insbesondere der Schlafraum durch die Gehäusewände des Modulgehäuses, also von den Seitenwänden und von der Rückwand sowie optional der Vorderwand begrenzt bzw. abgeschlossen.

Das Einbaumodul weist mindestens oder genau eine Modultür auf, welche zwischen mindestens einer Offenstellung und einer Schließstellung schwenkbar an dem Modulgehäuse angeordnet ist. Die Schwenkachse der Modultür steht senkrecht zum Gehäuseboden, also zur Bodenfläche des Einbaumoduls bzw. Schlafraums. Insbesondere ist die Modultür als eine Schwenktür ausgebildet, welche seitlich, insbesondere an einer Seitenwand, an dem Modulgehäuse schwenkbar befestigt ist. In der Schließstellung ist zumindest der Schlafraum durch die Modultür verschlossen und in der Offenstellung zugänglich. Insbesondere ist die Modultür in der Schließstellung mit dem Modulgehäuse verrastbar und/oder verriegelbar, sodass die Modultür in der Schließstellung gehalten und/oder abgesperrt ist. Insgesamt kann also das Einbaumodul, insbesondere der Schlafraum und damit auch die Schlafraumfläche durch die Gehäusewände des Modulgehäuses sowie die Modultür in der Schließstellung begrenzt sein, insbesondere also durch mindestens eine Seitenwand, vorzugsweise zwei Seitenwände, eine Rückwand, die Modultür in Schließstellung und optional der Vorderwand.

Das Einbaumodul weist mindestens oder genau eine Liege auf, welche in dem Schlafraum angeordnet ist. Insbesondere bietet die Liege einen Liege- und Schlafplatz für die mindestens eine Person. Besonders bevorzugt ist die Liege gepolstert und/oder mit einer Matratze ausstattbar. Insbesondere ist die Liege klappbar und/oder faltbar und/oder ausziehbar ausgestaltet. Im Speziellen weist das Einbaumodul genau zwei Liegen auf, wobei die beiden Liegen übereinander in dem Einbaumodul angeordnet sind. Besonders bevorzugt bietet jede der Liegen einen Liege- und Schlafplatz für genau eine Person. In einer Grundstellung stellt die Liege eine Grundfläche bereit, wobei die Grundfläche kleiner oder gleich der Schlafraumfläche des Schlafraums ist. Insbesondere ist die Liege in der Grundstellung in dem Schlafraum verstaut und/oder nicht benutzbar. Bevorzugt ist die Liege in der Grundstellung vollständig in dem Modulgehäuse aufgenommen, sodass die Modultür ungehindert zwischen der Offenstellung und der Schließstellung verschwenkt werden kann.

Im Rahmen der Erfindung wird vorgeschlagen, dass die mindestens oder genau eine Liege, im Speziellen die beiden Liegen, in einer Offenstellung der Modultür von der Grundstellung in eine Liegestellung bringbar sind. Insbesondere ist die Liege ausschließlich in der Offenstellung der Modultür von der Grundstellung in die Liegestellung bzw. von der Liegestellung in die Grundstellung bringbar. Vorzugsweise ist die Liege während einer Boarding-, Deboarding-, Lande- und/oder Startphase des Flugzeugs in der Grundstellung in dem Modulgehäuse verstaut, wobei die Modultür in der Schließstellung den Schlafraum verschließt. Vorzugsweise kann die Liege während des Fluges bereitgestellt werden, indem die Modultür geöffnet bzw. in die Offenstellung gebracht wird und die Liege von der Grundstellung in die Liegestellung gebracht wird. Zum Verstauen der Liege, kann die Liege wieder in die Grundstellung gebracht und die Modultür geschlossen bzw. in die Schließstellung gebracht werden. In der Liegestellung ist eine Liegefläche über den Schlafraum hinaus für mindestens oder genau eine Person bereitgestellt, wobei die Liegefläche größer als die Schlafraumfläche des Schlafraums ist. Insbesondere wird die Grundfläche über die Zugangsöffnung aus dem Modulgehäuse heraus vergrößert, um die Liegefläche zu erzeugen. Mit anderen Worten: Die Liege ragt in der Liegestellung durch die Zugangsöffnung aus dem Modulgehäuse und damit aus dem Schlafraum hinaus. Ein erster Teil der Liegefläche befindet sich im Schlafraum, während sich ein zweiter Teil der Liegefläche außerhalb des Schlafraumes befindet. Die Liegefläche tritt durch die Zugangsöffnung hindurch. Bevorzugt ist die Liegefläche derart bemessen, dass die mindestens eine Person in einer liegenden Position auf der Liegefläche Platz findet. Im Speziellen stellt die mindestens eine weitere Liege in der Liegestellung eine weitere Liegefläche zur Verfügung, wobei die Liegefläche und die weitere Liegefläche parallel zueinander ausgerichtet und/oder flächenmäßig identisch sind.

Der Vorteil der Erfindung liegt insbesondere darin, dass das Modulgehäuse besonders kompakt und bauraumsparend ausgestaltet werden kann, wobei die Liege über das Modulgehäuse hinaus zur Ausbildung der Liegefläche vergrößert werden kann. Insbesondere wird ein Einbaumodul vorgeschlagen, welches besonders einfach und kostengünstig in eine Flugzeugkabine integriert werden kann, um einen oder mehrere zusätzliche Schlafplätze für Personen, insbesondere die Besatzung des Flugzeugs, bereitzustellen. Je nach Anordnung des Einbaumoduls kann somit ein während des Fluges ungenutzter Platz in der Flugzeugkabine genutzt werden, um einen Schlaf- bzw. Ruhebereich für die Besatzung zu schaffen.

In einer konkreten Ausgestaltung ist vorgesehen, dass die mindestens eine Liege einen ersten und einen zweiten Liegeabschnitt aufweist. Insbesondere sind die beiden Liegeabschnitte relativ zueinander bewegbar. Der erste Liegeabschnitt definiert eine erste Teilliegefläche und der zweite Liegeabschnitt definiert eine zweite Teilliegefläche. Prinzipiell können die beiden Teilliegeflächen gleich groß ausgebildet sein. Alternativ können die beiden Teilliegeflächen unterschiedlich groß ausgebildet sein. Bevorzugt weisen die beiden Teilliegeflächen jeweils eine Abmessung auf, welche kleiner oder gleich der Grundfläche der Liege und/oder der Schlafraumfläche des Modulgehäuses ist. Besonders bevorzugt definieren die erste und/oder die zweite Teilliegefläche in der Grundstellung die Grundfläche. Hierzu sind die die beiden Teilliegeflächen in der Grundstellung überlappend und/oder deckungsgleich in dem Schlafraum angeordnet. Insbesondere sind die beiden Liegeabschnitte in der Grundstellung übereinander angeordnet und/oder gestapelt. In der Liegestellung bilden die beiden Teilliegeflächen über den Schlafraum hinaus gemeinsam die Liegefläche. Insbesondere sind die beiden Liegeabschnitte in der Liegestellung in axialer Richtung in Bezug auf eine Längsachse der Liege hintereinander angeordnet. Bevorzugt sind die beiden Teilliegeflächen in der Grundstellung parallel und/oder beabstandet zueinander angeordnet und in der Liegestellung aneinander angrenzend und/oder in einer gemeinsamen Ebene liegend angeordnet. Es ist somit eine Überlegung der Erfindung, eine Liege vorzugschlagen, welche besonders bauraumsparend ausgestaltet und einfach zu handhaben ist.

In einer Konkretisierung ist vorgesehen, dass bei einer Überführung von der Grundstellung in die Liegestellung, der erste Liegeabschnitt fest in dem Modulgehäuse verbleibt und der zweite Liegeabschnitt relativ zu dem ersten Liegeabschnitt über die Zugangsöffnung aus dem Modulgehäuse bewegt wird. Insbesondere ist der erste Liegeabschnitt stationär und/oder gehäusefest zu dem Modulgehäuse in dem Schlafraum angeordnet. Der zweite Liegeabschnitt kann manuell per Hand oder über einen mechanischen und/oder elektrischen Mechanismus aus bzw. in das Modulgehäuse bewegt werden. Insbesondere ist der zweite Liegeabschnitt in der Grundstellung oberhalb oder unterhalb des ersten Liegeabschnitts angeordnet. In der einfachsten Ausgestaltung kann der zweite Liegeabschnitt als ein separates Bauteil ausgebildet sein, welches zur Überführung in die Liegestellung aus dem Schlafraum genommen und an den ersten Liegeabschnitt angesetzt werden kann. Dabei können der erste und der zweite Liegeabschnitt beispielsweise formschlüssig und/oder kraftschlüssig miteinander verbunden werden. Bevorzugt ist sind die beiden Liegeabschnitt miteinander gelenkig verbunden und/oder zueinander geführt, wobei der zweite Liegeabschnitt zur Überführung in die Liegestellung relativ zu dem ersten Liegeabschnitt geführt bewegbar ist. Es ist somit eine Überlegung der Erfindung, eine Liege vorzuschlagen, welche sich durch eine besonders einfache Bedienung auszeichnet.

In einer Weiterbildung ist vorgesehen, dass der zweite Liegeabschnitt entlang einer Verschiebeachse relativ zu dem ersten Liegeabschnitt zwischen der Grundstellung und der Liegestellung verschiebbar ist. Insbesondere wird der zweite Liegeabschnitt zur Überführung in die Liegestellung aus dem Modulgehäuse ausgezogen und zur Überführung in die Grundstellung in das Modulgehäuse eingeschoben. Bevorzugt ist die Verschiebeachse durch die Längsachse der Liege und/oder eine Flugzeuglängsachse des Flugzeugs definiert. Beispielsweise kann der zweite Liegeabschnitt über ein Schienensystem an dem Modulgehäuse und/oder an dem ersten Liegeabschnitt verschiebbar montiert sein. Dabei kann der zweite Liegeabschnitt über das Schienensystem entlang der Verschiebeachse zu dem ersten Liegeabschnitt zwischen der Grundstellung und der Liegestellung geradgeführt sein.

In einer alternativen oder optional ergänzenden Weiterbildung ist vorgesehen, dass der zweite Liegeabschnitt um eine Schwenkachse relativ zu dem ersten Liegeabschnitt zwischen der Grundstellung und der Liegestellung verschwenkbar ist. Insbesondere wird der zweite Liegeabschnitt zur Überführung in die Liegestellung aus dem Modulgehäuse ausgeklappt und zur Überführung in die Grundstellung in das Modulgehäuse eingeklappt. Bevorzugt schneidet die Schwenkachse die Längsachse der Liege und/oder die Flugzeuglängsachse rechtwinklig. Beispielsweise kann der zweite Liegeabschnitt über ein Schwenkgelenk an dem Modulgehäuse und/oder an dem ersten Liegeabschnitt verschwenkbar montiert sein. Dabei kann der zweite Liegeabschnitt über das Schwenkgelenk um die Schwenkachse zu dem ersten Liegeabschnitt zwischen der Grundstellung und der Liegestellung verschwenkbar sein. Im Speziellen kann der zweite Liegeabschnitt über eine Kombination aus einer Verschiebebewegung und einer Schwenkbewegung in die Liegestellung bzw. die Grundstellung bewegt werden. Beispielsweise kann der zweite Liegeabschnitt hierzu über eine Klappgelenk mit dem Modulgehäuse und/oder dem ersten Liegeabschnitt verbunden sein.

In einer weiteren Ausführung ist vorgesehen, dass die Liege von der Grundstellung in eine Verstaustellung bringbar ist. Insbesondere ist die Liege in der Verstaustellung innerhalb des Modulgehäuses, vorzugsweise innerhalb des Schlafraums, verstaut. Bevorzugt ist die Liege in der Offenstellung der Modultür über die Zugangsöffnung von der Grundstellung in die Verstaustellung bringbar. Vorzugsweise nimmt die Liege in der Verstaustellung eine Verstaufläche ein, welche kleiner als die Schlafraumfläche des Schlafraums und/oder die Grundfläche der Liege in der Grundstellung ist. Besonders bevorzugt kann die Liege in der Verstaustellung in dem Modulgehäuse versenkt sein und/oder seitlich an eine der Gehäusewände anliegen, sodass ein Platzbedarf der Liege in der Verstaustellung auf ein Minimum beschränkt ist. In der Verstaustellung ist somit ein zusätzlicher Platz in dem Schlafraum verfügbar, welcher anderweitig genutzt werden kann. Beispielsweise kann der Schlafraum in der Verstaustellung der Liege zur Verstauung von Gegenständen oder als Aufenthaltsraum genutzt werden. Beispielsweise kann der Schlafraum in der Verstaustellung zur Unterbringung von Bettzeug für die Liege(n) dienen, welches in der Liegestellung der Liege(n) benötigt wird. Alternativ kann der Schlafraum während eines Kurz- oder Mittelstreckenflugs des Flugzeugs zur Unterbringung von anderweitigen Gegenständen, wie z.B. ein oder mehrere Gepäckstücke und/oder Servicewägen und/oder Erste-Hilfe-Koffer oder dergleichen, genutzt werden, wenn die Liege nicht benötigt wird. Somit wird ein multifunktionales Einbaumodul vorgeschlagen, welches je nach Bedarf als Aufenthaltsraum oder zur Verstauung von Gegenständen genutzt werden kann.

In einer weiteren Konkretisierung ist vorgesehen, dass der erste und der zweite Liegeabschnitt gemeinsam um eine weitere Schwenkachse verschwenkbar an dem Modulgehäuse angeordnet sind. Insbesondere ist die weitere Schwenkachse achsparallel zu der Längsachse der Liege und/oder der Flugzeuglängsachse ausgerichtet. Vorzugsweise ist der erste Liegeabschnitt über ein weiteres Schwenkgelenk schwenkbar an einer der Gehäusewände, insbesondere der Seitenwände oder der Rückwand oder eine in dem Modulgehäuse angeordnete Zwischenwand, befestigt. Die beiden Liegeabschnitte werden bei einer Überführung von der Grundstellung in die Verstaustellung gemeinsam um die weitere Schwenkachse, insbesondere über das weitere Schwenkgelenk, in dem Schlafraum verschwenkt werden. Vorzugsweise ist der zweite Liegeabschnitt in der Grundstellung mit dem ersten Liegeabschnitt verbunden bzw. bewegungsgekoppelt, sodass der zweite Liegeabschnitt bei einer Verschwenkung des ersten Liegeabschnitts mitgenommen wird. Insbesondere werden die beiden Liegeabschnitte gemeinsam an die Gehäusewand geklappt, sodass die beiden Liegeabschnitte hochkant bzw. vertikal in dem Schlafraum angeordnet sind. Optional kann die entsprechende Gehäusewand eine Vertiefung oder eine Öffnung aufweisen, in welche die Liege, insbesondere der erste und/oder der zweite Liegeabschnitt, in der Verstaustellung versenkt und/oder vollständig aufgenommen ist. Es wird somit ein Einbaumodul vorgeschlagen, welches sich durch eine besonders kompakte Bauform auszeichnet, wobei die Liege in einfacher Weise in dem Schlafraum platzsparend verstaut werden kann.

In einer weiteren Umsetzung ist vorgesehen, dass das Modulgehäuse einen Stauraum aufweist, welcher zur Aufnahme von Gegenständen ausgebildet und/oder geeignet ist. Insbesondere ist der Stauraum benachbart zu dem Schlafraum angeordnet. Der Stauraum grenzt dabei an den Schlafraum an und/oder ist räumlich von dem Schlafraum getrennt. Die in dem Stauraum zu verstauenden Gegenstände können dabei beliebig ausgebildet sein, beispielsweise können die Gegenstände persönliche Gegenstände, z.B. Gepäck, Bettzeug oder dergleichen, der Besatzung sein. Insbesondere kann der Stauraum durch ein oder mehrere Trennböden in mehrere Stauraumabschnitte unterteilt sein. Im Speziellen ist der Stauraum in der Schließstellung durch die Modultür verschlossen und in der Offenstellung zugänglich. Alternativ kann der Stauraum jedoch auch dauerhaft zugänglich oder durch eine separate Modultür verschließbar sein. Es wird somit ein Einbaumodul vorgeschlagen, welches sich durch eine besonders effiziente Ausnutzung des zur Verfügung stehenden Raums auszeichnet.

In einer weiteren Ausgestaltung ist vorgesehen, dass das Modulgehäuse mindestens oder genau eine Befestigungsschnittstelle aufweist, welche zur Befestigung des Einbaumoduls an einer Flugzeugstruktur des Flugzeugs ausgebildet und/oder geeignet ist. Insbesondere ist das Einbaumodul über die Befestigungsschnittstelle in seiner Einbaulage in der Flugzeugkabine fixiert und/oder lagerichtig ausgerichtet. Vorzugsweise kann das Einbaumodul über die Befestigungsschnittstelle an einem Kabinenboden und/oder Kabinenwand und/oder Kabinendecke der Flugzeugkabine befestigt und/oder befestigbar sein. Beispielsweise kann die Befestigungsschnittstelle einen Rast- oder Schnellverschluss aufweisen, welcher mit einem an der Flugzeugstruktur komplementären Befestigungsgegenschnittstelle zusammenwirkt. Im Speziellen weist das Einbaumodul mehrere der Befestigungsschnittstellen auf, wobei die Flugzeugstruktur entsprechend mehrere der Befestigungsgegenschnittstellen aufweist. Somit wird ein Einbaumodul vorgeschlagen, welches sich durch eine einfache und schnelle Montage in der Flugzeugkabine auszeichnet.

In einer weiteren Realisierung ist vorgesehen, dass das Modulgehäuse eine Versorgungsschnittstelle aufweist, welche zum Anschluss des Einbaumoduls an ein Versorgungssystem des Flugzeugs ausgebildet und/oder geeignet ist. Insbesondere kann das Einbaumodul über die Versorgungsschnittstelle mit Frischluft und/oder Sauerstoff und/oder elektrischer Energie versorgt werden. Die Versorgungsschnittstelle kann dabei in die Seitenwand, insbesondere einer der Kabinenwand zugewandten Seitenwand, und/oder Gehäusedecke des Modulgehäuses integriert sein. Vorzugsweise kann die Versorgungsschnittstelle mit einer Serviceeinheit, auch als Passenger Service Unit (PSU) bekannt, verbunden sein. Beispielsweise kann die Serviceeinheit ein oder mehrere Leselampen, Sauerstoffmasken, Informationsanzeigen, Lautsprecher, Lüftungsauslässe etc. aufweisen. Im Speziellen kann das Einbaumodul je Liegeplatz jeweils eine separate Serviceeinheit aufweisen. Es ist eine Überlegung der Erfindung, ein Einbaumodul zu schaffen, welches bei der Installation des Einbaumoduls einfach und komfortabel mit dem Versorgungssystem verbunden werden kann.

In einer weiteren Ausgestaltung ist vorgesehen, dass das Modulgehäuse eine Außenwand mit einer Krümmung aufweist, wobei die Krümmung an eine Geometrie der Flugzeugkabine angepasst ist. Insbesondere weist die der Kabinenwand zugewandte Seitenwand und/oder der Kabinendecke zugewandte Gehäusedecke des Modulgehäuses die Krümmung auf. Somit kann das Einbaumodul unter optimaler Ausnutzung des zur Verfügung stehenden Bauraums in die Flugzeugkabine eingesetzt werden.

Ein weiterer Gegenstand der Erfindung betrifft ein Flugzeug mit dem Einbaumodul wie dies bereits zuvor beschrieben wurde. Das Flugzeug weist eine Flugzeugkabine mit einem Gangbereich und mehreren Türbereichen auf. Insbesondere ist der Gangbereich durch einen Gang in der Flugzeugkabine definiert, welcher den vorderen Teil des Flugzeugs mit dem hinteren Teil des Flugzeugs in Flugzeuglängsrichtung verbindet. Insbesondere sind die Türbereiche jeweils durch eine Flugzeugtüre definiert, über welche ein Zugang, insbesondere Ein- bzw. Ausstieg, zu der Flugzeugkabine gebildet ist. Insbesondere verbindet der Gangbereich die einzelnen Türbereiche miteinander. Das Einbaumodul ist angrenzend zu einem der Türbereiche einer Flugzeugtür in der Flugzeugkabine angeordnet. Insbesondere ist das Einbaumodul in Flugzeuglängsrichtung betrachtet wahlweise vor oder hinter der Flugzeugtür bzw. dem Türbereich angeordnet. Insbesondere kann das Einbaumodul anstelle eines Toilettenmoduls oder anstelle einer Sitzreihe auf einer Seite der Flugzeugkabine angeordnet sein. Somit nimmt das Einbaumodul nur einen geringen Teil einer Bodenfläche in der Flugzeugkabine ein.

In einer konkreten Umsetzung ist vorgesehen, dass der Türbereich der Flugzeugtür in der Offenstellung der Modultür mit dem Schlafraum räumlich verbunden ist. Vorzugsweise ist das Einbaumodul hierzu in der Einbaulage mit seiner Zugangsöffnung in Flugzeuglängsrichtung zu dem Türbereich der Flugzeugtür hin ausgerichtet. Insbesondere bilden der Schlafraum und der Türbereich der Flugzeugtür in der Offenstellung einen gemeinsamen Raum, in welchen die mindestens eine Liege in der Liegestellung abschnittsweise angeordnet ist bzw. hineinragt. Dabei ist die Liegefläche in der Liegestellung der Liege abschnittsweise in dem Türbereich der Flugzeugtür angeordnet. Insbesondere wird der zweite Liegeabschnitt in der Offenstellung der Modultür über die Zugangsöffnung aus dem Schlafraum in den Türbereich der Flugzeugtür bewegt, sodass die Liegefläche gebildet wird. Insbesondere erstreckt sich die Liege in der Liegestellung in Flugzeuglängsrichtung und/oder ist mit ihrer Längsachse achsparallel zu der Flugzuglängsachse angeordnet. Somit kann der Türbereich der Flugzeugtür während des Fluges sinnvoll genutzt werden, um den Bauraum des Einbaumoduls deutlich zu reduzieren bzw. um die Liegefläche in den Türbereich der Flugzeugtür zu erweitern.

In einer weiteren Konkretisierung ist vorgesehen, dass der Türbereich der Flugzeugtür in der Offenstellung der Modultür gegenüber dem Gangbereich durch die Modultür räumlich abgegrenzt ist. Insbesondere ist in der Offenstellung ein Zugang von dem Gangbereich in den Türbereich durch die Modultür verhindert oder begrenzt. Vorzugsweise ist die Modultür von der Offenstellung in eine weitere Offenstellung verschwenkbar, wobei der Türbereich der Flugzeugtür in der weiteren Offenstellung von dem Gangbereich aus insbesondere durch eine Person zugänglich ist, wenn sich die Liege in der Liegestellung befindet. Vorzugsweise ist die Modultür zumindest in der Offenstellung arretierbar, sodass die Modultür in der Offenstellung selbsthaltend und/oder gesperrt ist. In der Schließstellung der Modultür ist der Türbereich mit dem Gangbereich räumlich verbunden. Insbesondere ist in der Schließstellung ein Zugang von dem Türbereich der Flugzeugtür in den Schlafraum durch die Modultür verhindert. Es ist somit eine Überlegung der Erfindung ein Einbaumodul zu schaffen, welches in der Liegestellung der Liege in einfacher Weise räumlich von einem Passagier- oder Arbeitsbereich der Flugzeugkabine abtrennbar ist.

In einer weiteren konkreten Ausgestaltung weist das Flugzeug ein Kabinenbauteil auf. Insbesondere kann das Kabinenbauteil als ein Monument, z.B. ein Küchenmonument, oder ein weiteres Modul, z.B. ein Nassraum- oder Toilettenmodul, oder eine Abtrennung, z.B. eine Trennwand (Partition), sein. Der Türbereich der Flugzeugtür ist in Flugzeuglängsrichtung einerseits durch das Einbaumodul und andererseits durch das Kabinenbauteil begrenzt. Insbesondere ist das Einbaumodul mit seiner Zugangsöffnung in Flugzeuglängsrichtung gegenüberliegend zu dem Kabinenbauteil angeordnet. In der Offenstellung steht die Modultür zur Abgrenzung des Gangbereichs mit dem Kabinenbauteil in Eingriff und/oder schließt mit diesem ab. Insbesondere ist in der Offenstellung der Modultür ein abgeschlossener Raum erzeugt, welcher in Flugzeuglängsrichtung einerseits durch das Kabinenbauteil und andererseits durch die Rückwand des Modulgehäuses begrenzt ist und quer zur Flugzeuglängsrichtung einerseits durch die Flugzeugtür und andererseits durch die Modultür sowie die Seitenwände des Modulgehäuses begrenzt ist. Insbesondere schließt die Modultür in der Offenstellung spaltfrei und/oder bündig mit dem Kabinenbauteil ab. Vorzugsweise ist die Modultür in der Offenstellung mit dem Kabinenbauteil verriegelbar, sodass die Modultür gegen ein ungewolltes Verschwenken gesichert ist.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1: ein Flugzeug in einer stark schematisierten Darstellung von oben als ein Ausführungsbeispiel der Erfindung;
- Figur 2a, b: ein Einbaumodul für das Flugzeug aus Figur 1 unterschiedlichen schematischen Ansichten;
- Figur 3a, b: das Einbaumodul weiteren schematischen Ansichten.

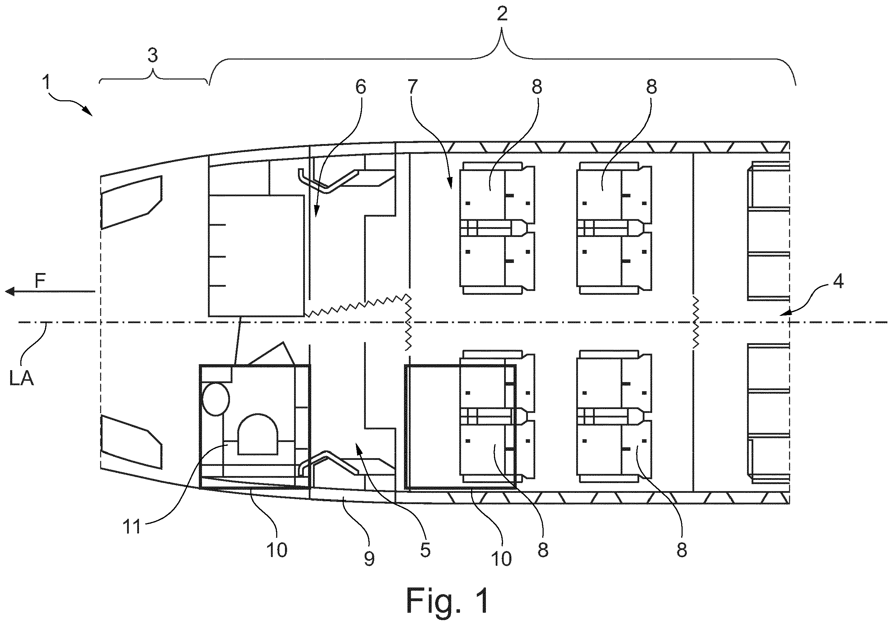

Figur 1 zeigt in einer stark schematisierten Darstellung von oben einen Ausschnitt eines Flugzeuges 1. Beispielsweise ist das Flugzeug 1 ein Passagierflugzeug, welches für einen Langstreckenflug geeignet ist. Das Flugzeug 1 definiert eine Flugzeuglängsachse LA, wobei eine Flugrichtung F des Flugzeugs 1 in axialer Richtung in Bezug auf die Flugzeuglängsachse LA gerichtet ist. Das Flugzeug 1 weist eine Flugzeugkabine 2 und ein Cockpit 3 auf, wobei sich das Cockpit 3 in Flugrichtung F an die Flugzeugkabine 2 anschließt.

Die Flugzeugkabine 2 weist einen Gangbereich 4, ein oder mehrere Türbereiche 5, einen Arbeitsbereich 6 sowie ein oder mehrere Sitzbereiche 7 auf. Dabei verbindet der Gangbereich 4 den Türbereich 5 mit dem Cockpit 3, dem Arbeitsbereich 6 und dem Sitzbereich 7. Der Gangbereich 4 ist durch einen Gang definiert, welcher sich in axialer Richtung in Bezug auf die Flugzeuglängsachse LA durch die Flugzeugkabine 2 erstreckt. Dabei schließt sich der Türbereich 5 quer zur Flugrichtung F auf der einen Seite und der Arbeitsbereich 6 auf der anderen Seite des Gangbereichs 4 an. Beispielsweise kann in dem Arbeitsbereich 6 eine Bordküche zur Zubereitung von Speisen und Getränken angeordnet sein. In dem Sitzbereich 7 sind mehrere Sitzreihen 8 angeordnet, welche auf beiden Seiten des Gangbereichs 4 angeordnet sind.

Das Flugzeug 1 weist eine Flugzeugtür 9 auf, über welche ein Ein- bzw. Ausstieg in bzw. aus der Flugzeugkabine 2 ermöglicht ist. Dabei ist der Türbereich 5 als der Bereich zwischen der Flugzeugtür 9 und dem Gangbereich 4 definiert, welcher beim Ein- bzw. Ausstieg passiert wird. Insbesondere ist die Flugzeugtür 9 als eine vordere Haupttür des Flugzeugs 1 ausgebildet.

Bei Langstreckenflügen, insbesondere bei Arbeitszeiten von mehr als 12 Stunden, ist es erforderlich einen Aufenthaltsraum für die Besatzung (Crew) des Flugzeugs 1 vorzusehen. Derartige Aufenthaltsräume sind durch mindestens einen Schlafplatz in einer ruhigen Umgebung charakterisiert. Hierzu weist das Flugzeug 1 ein Einbaumodul 10, hier nur schematisch angedeutet, auf, welches als ein sogenanntes Crew Rest Compartment (CRC) ausgebildet ist und zur Unterbringung von mindestens einer, vorzugsweise genau zwei, Personen der Besatzung dient.

Das Einbaumodul 10 kann wahlweise in Flugrichtung F vor der oder nach der Flugzeugtür 9 angrenzend zu dem Türbereich 5 angeordnet sein. Bevorzugt ist das Einbaumodul 10 in Flugrichtung F gesehen auf der linken Flugzeugseite angeordnet. Beispielsweise kann das Einbaumodul 10 anstelle einer vorderen Sitzreihe 8 in dem Sitzbereich 7 angeordnet sein. Alternativ kann das Einbaumodul 10 anstelle eines Toilettenmoduls 11 angeordnet sein. Das Einbaumodul 10 ist in einer festgelegten Einbaulage in der Flugzeugkabine 2 eingebaut, wobei das Einbaumodul 10 für ein bestimmtes Flugzeug in Form des Flugzeugs 1 bzw. dessen Flugzeugtyp dimensioniert ist.

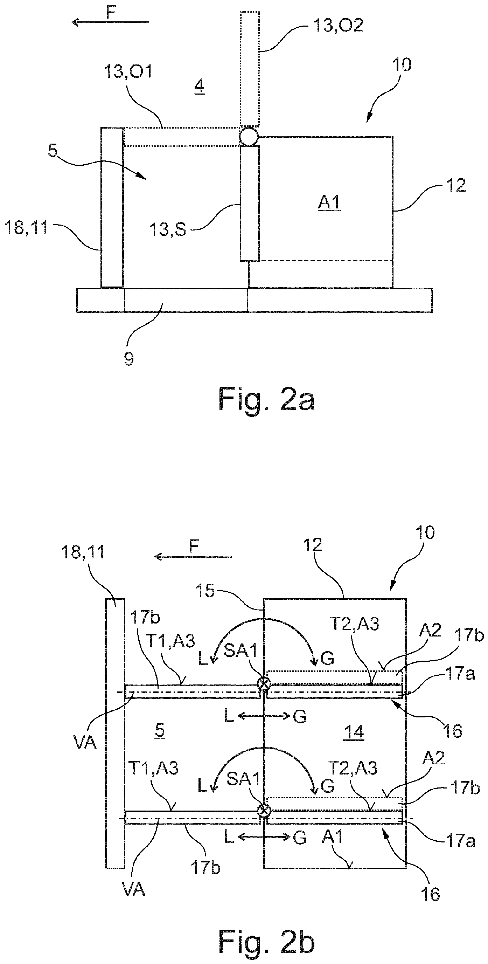

Die Figuren 2a, b zeigen in einer schematischen Darstellung jeweils das Einbaumodul 10 in einer Einbausituation als ein Ausführungsbeispiel der Erfindung. Dabei ist das Einbaumodul 10 in der Figur 2a in einer Draufsicht und in der Figur 2b in einer Seitenansicht dargestellt. Das Einbaumodul 10 weist ein Modulgehäuse 12 sowie eine Modultür 13 auf, wobei die Modultür 13 an dem Modulgehäuse 12 zwischen einer Schließstellung S, einer Offenstellung O1 und einer weiteren Offenstellung O2 schwenkbar gelagert ist. Beispielsweise sind das Modulgehäuse 12 und/oder die Modultür 13 in Plattenbauweise, insbesondere aus Sandwich-Paneelen, gefertigt.

Das Modulgehäuse 12 weist einen Schlafraum 14 mit einer Schlafraumfläche A1 auf, wobei der Schlafraum 14 über eine Zugangsöffnung 15 mit dem Türbereich 5 räumlich verbunden ist. Hierzu ist das Modulgehäuse 12 mit der Zugangsöffnung 15 in Flugzeuglängsrichtung zu dem Türbereich 5 hin geöffnet, wobei der Schlafraum 14 in der Schließstellung S der Modultür 13 verschlossen und in den Offenstellungen O1, O2 über die Zugangsöffnung 15 zugänglich ist. Der Schlafraum 14 dient dabei zur abschnittsweisen Aufnahme von ein oder zwei Personen, die sich in Flugzeuglängsrichtung in einer ausgestreckten bzw. liegenden Position befinden.

Hierzu weist das Einbaumodul 10 zwei Liegen 16 auf, welche in dem Schlafraum 14 übereinander angeordnet sind und jeweils in eine Grundstellung G und eine Liegestellung L überführbar sind. In der Grundstellung G sind die Liegen 16 vollständig in dem Modulgehäuse 12 aufgenommen. In der Liegestellung L sind die Liegen 16 aus dem Modulgehäuse 12 heraus erweitert und stellen jeweils einen Liege- bzw. Schlafplatz für jeweils eine Person zu Verfügung. In der Grundstellung G weist die Liege 16 eine Grundfläche A2 und in der Liegestellung L eine Liegefläche A3 auf. Dabei ist die Grundfläche A2 kleiner oder gleich der Schlafraumfläche A1 und die Liegefläche A3 größer als die Schlafraumfläche A1. Beispielsweise weist die Schlafraumfläche A1 eine Abmessung von mindestens oder genau 35x38 Zoll bzw. von 89x96 cm auf. Beispielsweise weist die Liegefläche A3 eine Abmessung von mindestens oder genau 180x60 cm auf. Beispielsweise können die beiden Liegeabschnitt 17a, b selbst gepolstert und/oder durch eine zusätzliche Matratze gepolstert werden.

Die beiden Liegen 16 weisen jeweils einen ersten und einen zweiten Liegeabschnitt 17a, b auf, wobei der erste Liegeabschnitt 17a eine erste Teilliegefläche T1 und der zweite Liegeabschnitt 17b eine zweite Teilliegefläche T2 aufweist. In der Grundstellung G sind die beiden Liegeabschnitte 17a, b übereinander und/oder überdeckend angeordnet, sodass die Grundfläche A2 durch die erste bzw. die zweite Teilliegefläche T1, T2 gebildet ist. Um die Liegen 16 von der Grundstellung G in die Liegestellung L zu überführen, kann der zweite Liegeabschnitt 17b in einer der Offenstellungen O1, O2 der Modultür 13 relativ zu dem ersten Liegeabschnitt 17a über die Zugangsöffnung 15 aus dem Schlafraum 14 in den Türbereich 5 bewegt werden, wobei der erste Liegeabschnitt 17a stationär in dem Schlafraum 14 verbleibt. In der Liegestellung L sind die beiden Liegeabschnitte 17a, b nebeneinander angeordnet und/oder liegen gemeinsam in einer Ebene, sodass die Liegefläche A3 durch die beiden Teilliegeflächen T1, T2 gebildet ist.

Dabei kann der der zweite Liegeabschnitt 17b zwischen der Grundstellung G und der Liegestellung L entlang einer Verschiebeachse VA relativ zu dem ersten Liegeabschnitt 17a verschoben werden. Beispielsweise können die beiden Liegeabschnitte 17a, b über ein Schienensystem miteinander verbunden sein, wobei der zweite Liegeabschnitt 17b über das Schienensystem relativ zu dem ersten Liegeabschnitt 17a geradgeführt ist. Alternativ oder optional ergänzend kann der der zweite Liegeabschnitt 17b zwischen der Grundstellung G und der Liegestellung L um eine Schwenkachse SA1 relativ zu dem ersten Liegeabschnitt 17a verschenkt werden. Beispielsweise können die beiden Liegeabschnitte 17a, b über ein Schwenkgelenk miteinander verbunden sein, wobei der zweite Liegeabschnitt 17b über das Schwenkgelenk relativ zu dem ersten Liegeabschnitt 17a schwenkbar gelagert ist.

Somit können je nach Bedarf eine oder beide Liegen 16 aus dem Modulgehäuse 12 in den Türbereich 5 durch Ausklappen, Ausziehen oder einen ähnlichen passenden Mechanismus erweitert werden, um die während des Fluges ungenutzte Fläche des Türbereichs 5 als zusätzlichen Schlafraum zu nutzen. Somit wird ein multifunktionales Einbaumodul 10 geschaffen, welches der Besatzung während des Fluges zwei Liegen 16 zur Verfügung stellen kann. Für Start, Taxi, Landung sowie ggfs. starke Turbulenzen können die Liegen 16 wieder in dem Modulgehäuse 12 verstaut werden.

Der Türbereich 5 ist gegenüberliegend zu dem Einbaumodul 10 in der Flugrichtung F durch ein Kabinenbauteil 18 begrenzt, wobei das Kabinenbauteil 18 beispielsweise als das Toilettenmodul 11 oder als eine Trennwand ausgebildet sein kann. Die Abgrenzung des Schlafraums 14 gegenüber dem Gangbereich 4 und dem Arbeitsbereich 6 wird dabei über die Modultür 13 realisiert. In der Offenstellung O1 grenzt die Modultür 13 hierzu den Türbereich 5 ab, sodass der Türbereich 5 zu dem Gangbereich 4 durch die Modultür 13 räumlich abgetrennt ist. Durch ein weiteres Öffnen der Tür in die weitere Offenstellung O2 kann der Türbereich 5 sowie der Schlafraum 14 in der Liegestellung L der Liegen 16 von dem Gangbereich 5 aus betreten werden.

Die Modultür 13 ist so gestaltet, dass sie mit dem gegenüberliegenden Kabinenbauteil 18 abschließt, sodass in der Offenstellung O1 ein abgeschlossener Raum gebildet ist. Beispielsweise kann die Modultür 13 mit dem Kabinenbauteil 18 verrasten und/oder versperrt werden, sodass die Modultür 13 in der Offenstellung O1 an dem Kabinenbauteil 18 festgelegt und/oder festlegbar ist. Optional kann der zweite Liegeabschnitt 17b der Liegen 16 in der Liegestellung L an dem Kabinenbauteil 18 abgestützt und/oder festgelegt sein.

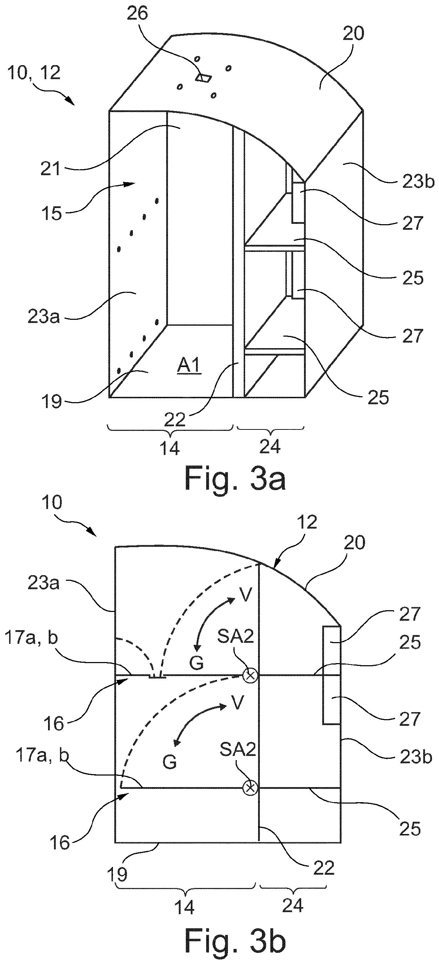

Die Figur 3a zeigt das Modulgehäuse 12 des Einbaumoduls 10 in einer perspektivischen Darstellung von vorne. Das Modulgehäuse 12 weist einen Gehäuseboden 19, eine Gehäusedecke 20, eine Rückwand 21, eine Zwischenwand 22 sowie Seitenwände 23a, b auf. Das Modulgehäuse 12 ist über die gesamte Vorderseite durch die Zugangsöffnung 15 geöffnet, wobei der Schlafraum 14 gegenüber der Zugangsöffnung 15 durch die Rückwand 21 und seitlich einerseits durch die Seitenwand 23a und andererseits durch die Zwischenwand 22 von einem Stauraum 24 räumlich abgetrennt ist. Der Stauraum 24 ist dabei gegenüber der Zugangsöffnung 15 durch die Rückwand 21 und seitlich einerseits durch die Seitenwand 23b und andererseits durch die Zwischenwand 22 von dem Schlafraum 14 räumlich abgetrennt.

Die Schlafraumfläche A1 ist dabei als die Fläche definiert, welche durch die Rückwand 21, die Seitenwand 23a sowie die Zwischenwand 22 begrenzt ist. Das Modulgehäuse 12 ist breiter als für die Liegen 16 notwendig ausgebildet, wobei der zusätzliche Stauraum 24 zur Aufnahme von Gegenständen, wie z.B. Bettzeug, Gepäckstücke, Service- oder Notfallausrüstung oder dergleichen dient. Der Stauraum 24 ist zudem durch Trennböden 25 in mehrere einzelne Stauraumabschnitte unterteilt.

Die Gehäusedecke 20 weist eine an eine an die Flugzeuggeometrie, insbesondere an eine Kabinendecke, angepasste Krümmung auf, sodass das Modulgehäuse 12 passgenau in die Flugzeugkabine 2 des bestimmungsgemäßen Flugzeugs 1 eingebaut werden kann. Dabei kann das Modulgehäuse 12 über ein oder mehrere mechanische Befestigungsschnittstellen 26, schematisch angedeutet, an einer Flugzeugstruktur, insbesondere an der Kabinendecke und/oder einem Kabinenboden, befestigt werden kann. Hierzu kann zumindest eine Befestigungsschnittstelle 26 an der Gehäusedecke 20 und eine weitere Befestigungsschnittstelle, nicht dargestellt, an dem Gehäuseboden 19 angeordnet sein. Beispielsweise können die Befestigungsschnittstellen 26 einen Schnellspanner oder ein anderes entsprechend geeignetes Befestigungssystem aufweisen, welches mit einer entsprechenden Gegenschnittstelle, z.B. eine Sitzschiene, der Flugzeugstruktur verbindbar ist.

In der Liegestellung L der Liegen 16 verbleibt der Kopf des Schlafenden in dem Schlafraum 14, dabei ist es erforderlich, dass der Person in dem Schlafraum 14 alle wichtigen Systeme, wie z.B. Luft, Sauerstoff, Licht, Signale etc. zur Verfügung gestellt sind. Hierzu weist das Modulgehäuse 12 ein oder mehrere Versorgungsschnittstellen 27 auf, über welche das Einbaumodul 10 an ein Versorgungsystem des Flugzeugs 1 angeschlossen werden kann. Beispielsweise kann das Einbaumodul 10 über die Versorgungsschnittstelle 27 an eine Frischluftversorgung, eine Sauerstoffversorgung und/oder ein Bordnetz angeschlossen werden. Die Versorgungsschnittstelle 27 ist beispielsweise in die Seitenwand 23b integriert und kann somit in einfacher Weise mit dem Versorgungssystem der gegenüberliegenden Kabinenwand verbunden werden. Beispielsweise kann in dem Schlafraum 14 und/oder in dem Stauraum 24 ein oder mehrere Serviceeinheiten, auch als Passenger Service Unit (PSU) bekannt, angeordnet sein, welche über die Versorgungsschnittstelle 27 entsprechend versorgt werden können.

Figur 3b zeigt das Einbaumodul 10 in einer axialen Ansicht von vorne. Die Liegen 16 sind innerhalb des Stauraums 14 von der Grundstellung G in eine Verstaustellung V bringbar. Hierzu sind die Liegeabschnitte 17a, b der beiden Liegen 16 jeweils gemeinsam um eine weitere Schwenkachse SA2 zwischen der Grundstellung G und der Verstaustellung V innerhalb des Schlafraums 14 verschwenkbar an der Zwischenwand 22 montiert. In der Verstaustellung V sind die beiden Liegeabschnitte 17a, b an die Zwischenwand 22 verschwenkt, sodass der Schlafraum 14 multifunktional, z.B. als Betraum für arabische Fluglinien, als zusätzlicher Stauraum, als Ruheraum oder dergleichen genutzt werden kann. Optional kann vorgesehen sein, dass die Liegeabschnitte 17a, b, insbesondere der oberen Liege 16, zweiteilig ausgebildet sind, wobei ein erster Teil an die Zwischenwand 22 und ein zweiter Teil an die Seitenwand 23a geklappt werden kann. Dies ist insbesondere dann erforderlich, wenn der zur Verfügung stehende Deckenraum nicht ausreicht, um die beiden Liegeabschnitte 17a, b als Ganzes an die Zwischenwand 22 zu klappen.

Das Einbaumodul 10 kann somit alleinig dem Zweck dienen, Schlaf- bzw. Liegeplätze zur Verfügung zu stellen. Alternativ kann das Einbaumodul 10 jedoch auch, insbesondere in der Verstaustellung V, der beiden Liegen 16 anderweitig genutzt werden. Somit wird ein Einbaumodul 10 vorgeschlagen, welches ohne großen Verlust von Bodenraum ein vollwertiges CRC für zwei Personen zu Verfügung stellt, wobei der Schlafraum 14 nicht nur als Schlafplatz sondern auch für andere Funktionen genutzt werden kann.

### Bezugszeichenliste

- 1: Flugzeug
- 2: Flugzeugkabine
- 3: Cockpit
- 4: Gangbereich
- 5: Türbereich
- 6: Arbeitsbereich
- 7: Sitzbereich
- 8: Sitzreihen
- 9: Flugzeugtür
- 10: Einbaumodul
- 11: Toilettenmodul
- 12: Modulgehäuse
- 13: Modultür
- 14: Schlafraum
- 15: Zugangsöffnung
- 16: Liegen
- 17a, b: Liegeabschnitte
- 18: Kabinenbauteil
- 19: Gehäuseboden
- 20: Gehäusedecke
- 21: Rückwand
- 22: Zwischenwand
- 23a, b: Seitenwände
- 24: Stauraum
- 25: Trennböden
- 26: Befestigungsschnittstelle
- 27: Versorgungsschnittstelle

- A1: Schlafraumfläche
- A2: Grundfläche
- A3: Liegefläche
- F: Flugrichtung
- G: Grundstellung
- L: Liegestellung
- V: Verstaustellung
- LA: Flugzeuglängsachse
- VA: Verschiebeachse
- SA1: Schwenkachse
- SA2: weitere Schwenkachse

## Patentansprüche

1. Einbaumodul (10) für ein Flugzeug (1),
mit einem Modulgehäuse (12),
wobei das Modulgehäuse (12) einen Schlafraum (14) mit einer Schlafraumfläche (A1) aufweist, wobei der Schlafraum (14) über eine Zugangsöffnung (15) zugänglich ist,
mit einer Modultür (13),
wobei die Modultür (13) schwenkbar an dem Modulgehäuse (12) angeordnet ist, wobei die Modultür (13) in einer Schließstellung (S) die Zugangsöffnung (15) verschließt und in einer Offenstellung (O1) die Zugangsöffnung (15) freigibt,
mit mindestens einer Liege (16),
wobei die Liege (16) in dem Schlafraum (14) und in einer Grundstellung (G) eine Grundfläche (A2) bereitstellt, wobei die Grundfläche (A2) kleiner oder gleich als die Schlafraumfläche (A1) des Schlafraums (14) ist,
**dadurch gekennzeichnet, dass**
die Liege (16) in der Offenstellung (O1) der Modultür (13) von der Grundstellung (G) in eine Liegestellung (L) bringbar ist, wobei in der Liegestellung (L) eine Liegefläche (A3) über den Schlafraum (14) hinaus für mindestens eine Person bereitgestellt ist, wobei die Liegefläche (A3) größer als die Schlafraumfläche (A1) des Schlafraums (14) ist.

2. Einbaumodul (10) nach Anspruch 1, **dadurch gekennzeichnet, dass** die Liege (16) einen ersten und einen zweiten Liegeabschnitt (17a, b) aufweist, wobei der erste Liegeabschnitt (17a) eine erste Teilliegefläche (T1) und der zweite Liegeabschnitt (17b) eine zweite Teilliegefläche (T2) definiert, wobei die beiden Teilliegeflächen (T1, T2) in der Grundstellung (G) überlappend und/oder deckungsgleich in dem Schlafraum (12) angeordnet sind und in der Liegestellung (L) gemeinsam über den Schlafraum (14) hinaus die Liegefläche (A3) bilden.

3. Einbaumodul (10) nach Anspruch 2, **dadurch gekennzeichnet, dass** bei einer Überführung der Liege (15) von der Grundstellung (G) in die Liegestellung (L) der erste Liegeabschnitt (17a) fest in dem Modulgehäuse (12) verbleibt und der zweite Liegeabschnitt (17b) relativ zu dem ersten Liegeabschnitt (17a) über die Zugangsöffnung (15) aus dem Modulgehäuse (12) bewegt wird.

4. Einbaumodul (10) nach Anspruch 3, **dadurch gekennzeichnet, dass** der zweite Liegeabschnitt (17b) entlang einer Verschiebeachse (VA) zwischen der Grundstellung (G) und der Liegestellung (L) relativ zu dem ersten Liegeabschnitt (17a) verschiebbar ist.

5. Einbaumodul (10) nach Anspruch 3 oder 4, **dadurch gekennzeichnet, dass** der zweite Liegeabschnitt (17b) um eine Schwenkachse (SA1) zwischen der Grundstellung (G) und der Liegestellung (L) relativ zu dem ersten Liegeabschnitt (17a) verschwenkbar ist.

6. Einbaumodul (10) nach einem der vorhergehenden Ansprüche, **dadurch gekennzeichnet, dass** die Liege (16) von der Grundstellung (G) in eine Verstaustellung (V) bringbar ist, wobei in der Verstaustellung (V) ein zusätzlicher Platz in dem Schlafraum (14) verfügbar ist.

7. Einbaumodul (10) nach Anspruch 6, **dadurch gekennzeichnet, dass** der erste und der zweite Liegeabschnitt (17a, b) zwischen der Grundstellung (G) und der Verstaustellung (V) gemeinsam um eine weitere Schwenkachse (SA2) verschwenkbar an dem Modulgehäuse (12) angeordnet sind, wobei die beiden Liegeabschnitte (17a, b) bei einer Überführung von der Grundstellung (G) in die Verstaustellung (V) gemeinsam um die weitere Schwenkachse (SA2) innerhalb des Schlafraums (14) verschwenkt werden.

8. Einbaumodul (10) nach einem der vorhergehenden Ansprüche, **dadurch gekennzeichnet, dass** das Modulgehäuse (12) einen Stauraum (24) zur Aufnahme von Gegenständen aufweist, wobei der Stauraum (24) an den Schlafraum (14) angrenzt und/oder räumlich von dem Schlafraum (14) getrennt ist.

9. Einbaumodul (10) nach einem der vorhergehenden Ansprüche, **dadurch gekennzeichnet, dass** das Modulgehäuse (12) eine Befestigungsschnittstelle (26) aufweist, wobei das Einbaumodul (10) über die Befestigungsschnittelle (26) an einer Flugzeugstruktur des Flugzeugs (1) befestigbar ist.

10. Einbaumodul (10) nach einem der vorhergehenden Ansprüche, **dadurch gekennzeichnet, dass** das Modulgehäuse (12) eine Versorgungsschnittstelle (27) aufweist, wobei das Einbaumodul (10) über die Versorgungsschnittelle (27) an ein Versorgungssystem des Flugzeugs (1) anschließbar ist.

11. Einbaumodul (10) nach einem der vorhergehenden Ansprüche, **dadurch gekennzeichnet, dass** das Modulgehäuse (12) eine Außenwand mit einer Krümmung aufweist, wobei die Krümmung an eine Geometrie einer Flugzeugkabine (2) des Flugzeugs (1) angepasst ist.

12. Flugzeug (1) mit einer Flugzeugkabine (2), wobei die Flugzeugkabine (2) einen Gangbereich (4) und mindestens einen Türbereich (5) aufweist, **gekennzeichnet, durch** ein Einbaumodul (10) nach einem der vorhergehenden Ansprüche, wobei das Einbaumodul (10) angrenzend zu dem Türbereich (5) in der Flugzeugkabine (2) angeordnet ist.

13. Flugzeug (1) nach Anspruch 12, **dadurch gekennzeichnet, dass** der Schlafraum (14) in der Offenstellung (O1) der Modultür (13) mit dem Türbereich (5) räumlich verbunden ist, wobei die Liege (16) in der Liegestellung (L) mit der Liegefläche (A3) abschnittsweise in dem Türbereich (5) angeordnet ist.

14. Flugzeug (1) nach Anspruch 12 oder 13, **dadurch gekennzeichnet, dass** der Türbereich (5) in der Offenstellung (O1) der Modultür (13) gegenüber dem Gangbereich (4) räumlich durch die Modultür (13) abgegrenzt ist und dass der Türbereich (5) in der Schließstellung (S) der Modultür (13) mit dem Gangbereich (4) räumlich verbunden ist.

15. Flugzeug (1) nach Anspruch 14, **gekennzeichnet durch** ein Kabinenbauteil (18), wobei der Türbereich (5) in einer Flugzeuglängsrichtung einerseits durch das Einbaumodul (10) und andererseits durch das Kabinenbauteil (18) begrenzt ist, wobei die Modultür (13) in der Offenstellung (O1) zur Abgrenzung des Gangbereichs (4) mit dem Kabinenbauteil (18) abschließt und/oder in Eingriff steht.

## Claims

1. Built-in module (10) for an aircraft (1),
having a module housing (12),
wherein the module housing (12) has a sleeping space (14) with a sleeping space surface area (A1), wherein the sleeping space (14) can be accessed via an access opening (15),
having a module door (13),
wherein the module door (13) is pivotably arranged on the module housing (12), wherein the module door (13) closes the access opening (15) when in a closed position (S), and opens the access opening (15) when in an open position (01),
having at least one couch (16),
wherein the couch (16) provides, in the sleeping space (14) and when in a basic position (G), a basic surface area (A2), wherein the basic surface area (A2) is smaller than or equal to the sleeping space surface area (A1) of the sleeping space (14),
**characterized in that**
when the module door (13) is in the open position (01), the couch (16) can be moved from the basic position (G) to a lying position (L), wherein in the lying position (L) a lying surface area (A3) for at least one person is provided over the sleeping space (14), wherein the lying surface area (A3) is larger than the sleeping space surface area (A1) of the sleeping space (14).

2. Built-in module (10) according to Claim 1, **characterized in that** the couch (16) has a first and a second couch portion (17a, b), wherein the first couch portion (17a) defines a first part couch surface area (T1) and the second couch portion (17b) defines a second part couch surface area (T2), wherein the two part couch surface areas (T1, T2) are arranged so as to partially and/or fully overlap in the sleeping space (12) when in the basic position (G), and together form the couch surface area (A3) over the sleeping space (14) when in the lying position (L).

3. Built-in module (10) according to Claim 2, **characterized in that**, when moving the couch (15) from the basic position (G) to the lying position (L), the first couch portion (17a) remains secured in the module housing (12) and the second couch portion (17b) is moved relative to the first couch portion (17a) and out of the module housing (12) via the access opening (15).

4. Built-in module (10) according to Claim 3, **characterized in that** the second couch portion (17b) can be displaced relative to the first couch portion (17a) along a displacement axis (VA), between the basic position (G) and the lying position (L).

5. Built-in module (10) according to Claim 3 or 4, **characterized in that** the second couch portion (17b) can be pivoted relative to the first couch portion (17a) about a pivot axis (SA1), between the basic position (G) and the lying position (L).

6. Built-in module (10) according to one of the preceding claims, **characterized in that** the couch (16) can be moved from the basic position (G) to a stowed position (V), wherein in the stowed position (V) additional space is available in the sleeping space (14).

7. Built-in module (10) according to Claim 6, **characterized in that** the first and the second couch portions (17a, b) are arranged on the module housing (12) between the basic position (G) and the stowed position (V) so as to be able to be pivoted together about a further pivot axis (SA2), wherein, when moving from the basic position (G) to the stowed position (V), the two couch portions (17a, b) are pivoted together about the further pivot axis (SA2) within the sleeping area (14).

8. Built-in module (10) according to one of the preceding claims, **characterized in that** the module housing (12) has a storage space (24) for accommodating objects, wherein the storage space (24) adjoins the sleeping space (14) and/or is spatially separated from the sleeping space (14).

9. Built-in module (10) according to one of the preceding claims, **characterized in that** the module housing (12) has an attachment interface (26), wherein the built-in module (10) can be attached to an aircraft structure of the aircraft (1) by means of the attachment interface (26).

10. Built-in module (10) according to one of the preceding claims, **characterized in that** the module housing (12) has a supply interface (27), wherein the built-in module (10) can be connected to a supply system of the aircraft (1) by means of the supply interface (27).

11. Built-in module (10) according to one of the preceding claims, **characterized in that** the module housing (12) has an external wall with a curvature, wherein the curvature matches a geometry of an aircraft cabin (2) of the aircraft (1).

12. Aircraft (1) having an aircraft cabin (2), wherein the aircraft cabin (2) has an aisle region (4) and at least one door region (5), **characterized by** a built-in module (10) according to one of the preceding claims, wherein the built-in module (10) is arranged adjacent to the door region (5) in the aircraft cabin (2).

13. Aircraft (1) according to Claim 12, **characterized in that** the sleeping space (14) is spatially connected to the door region (5) when the module door (13) is in the open position (01), wherein, when the couch (16) is in the lying position (L), some of the lying surface area (A3) is arranged in the door region (5).

14. Aircraft (1) according to Claim 12 or 13, **characterized in that**, when the module door (13) is in the open position (01), the door region (5) is spatially delimited with respect to the aisle region (4) by the module door (13), and **in that**, when the module door (13) is in the closed position (S), the door region (5) is spatially connected to the aisle region (4).

15. Aircraft (1) according to Claim 14, **characterized by** a cabin component (18), wherein the door region (5) in a longitudinal direction of the aircraft is bounded on one hand by the built-in module (10) and on the other hand by the cabin component (18), wherein the module door (13), when in the open position (01), terminates at and/or is in engagement with the cabin component (18) so as to delimit the aisle region (4).

## Revendications

1. Module intégré (10) pour un aéronef (1), comprenant un boîtier de module (12),
le boîtier de module (12) présentant un espace de couchage (14) comprenant une surface de couchage (A1), l'espace de couchage (14) étant accessible par une ouverture d'accès (15),
comprenant une porte de module (13),
la porte de module (13) étant agencée de manière pivotante sur le boîtier de module (12), la porte de module (13) fermant l'ouverture d'accès (15) dans une position de fermeture (S) et libérant l'ouverture d'accès (15) dans une position d'ouverture (O1), comprenant au moins une couchette (16),
la couchette (16) fournissant une surface de base (A2) dans l'espace de couchage (14) et dans une position de base (G), la surface de base (A2) étant inférieure ou égale à la surface d'espace de couchage (A1) de l'espace de couchage (14),
**caractérisé en ce que**
la couchette (16) peut être amenée de la position de base (G) dans une position allongée (L) dans la position d'ouverture (O1) de la porte de module (13), dans la position allongée (L) une surface d'allongement (A3) étant fournie au-delà de l'espace de couchage (14) pour au moins une personne, la surface d'allongement (A3) étant supérieure à la surface d'espace de couchage (A1) de l'espace de couchage (14).

2. Module intégré (10) selon la revendication 1, **caractérisé en ce que** la couchette (16) présente une première et une deuxième section de couchette (17a, b), la première section de couchette (17a) définissant une première surface d'allongement partielle (T1) et la deuxième section de couchette (17b) définissant une deuxième surface d'allongement partielle (T2), les deux surfaces d'allongement partielles (T1, T2) étant agencées dans la position de base (G) en se chevauchant et/ou en se recouvrant dans l'espace de couchage (12) et formant ensemble la surface d'allongement (A3) au-delà de l'espace de couchage (14) dans la position allongée (L).

3. Module intégré (10) selon la revendication 2, **caractérisé en ce que**, lors d'un transfert de la couchette (15) de la position de base (G) dans la position allongée (L), la première section de couchette (17a) reste fixe dans le boîtier de module (12) et la deuxième section de couchette (17b) est déplacée par rapport à la première section de couchette (17a) hors du boîtier de module (12) par l'ouverture d'accès (15).

4. Module intégré (10) selon la revendication 3, **caractérisé en ce que** la deuxième section de couchette (17b) peut être coulissée par rapport à la première section de couchette (17a) le long d'un axe de coulissement (VA) entre la position de base (G) et la position allongée (L).

5. Module intégré (10) selon la revendication 3 ou 4, **caractérisé en ce que** la deuxième section de couchette (17b) peut pivoter autour d'un axe de pivotement (SA1) entre la position de base (G) et la position allongée (L) par rapport à la première section de couchette (17a).

6. Module intégré (10) selon l'une quelconque des revendications précédentes, **caractérisé en ce que** la couchette (16) peut être amenée de la position de base (G) dans une position de rangement (V), un espace supplémentaire étant disponible dans l'espace de couchage (14) dans la position de rangement (V).

7. Module intégré (10) selon la revendication 6, **caractérisé en ce que** la première et la deuxième section de couchette (17a, b) sont agencées sur le boîtier de module (12) de manière à pouvoir pivoter ensemble autour d'un autre axe de pivotement (SA2) entre la position de base (G) et la position de rangement (V), les deux sections de couchette (17a, b) étant pivotées ensemble autour de l'autre axe de pivotement (SA2) à l'intérieur de l'espace de couchage (14) lors d'un transfert de la position de base (G) dans la position de rangement (V).

8. Module intégré (10) selon l'une quelconque des revendications précédentes, **caractérisé en ce que** le boîtier de module (12) présente un espace de rangement (24) pour recevoir des objets, l'espace de rangement (24) étant adjacent à l'espace de couchage (14) et/ou séparé dans l'espace de l'espace de couchage (14).

9. Module intégré (10) selon l'une quelconque des revendications précédentes, **caractérisé en ce que** le boîtier de module (12) présente une interface de fixation (26), le module intégré (10) pouvant être fixé à une structure d'aéronef de l'aéronef (1) par l'intermédiaire de l'interface de fixation (26).

10. Module intégré (10) selon l'une quelconque des revendications précédentes, **caractérisé en ce que** le boîtier de module (12) présente une interface d'alimentation (27), le module intégré (10) pouvant être raccordé à un système d'alimentation de l'aéronef (1) par l'intermédiaire de l'interface d'alimentation (27) .

11. Module intégré (10) selon l'une quelconque des revendications précédentes, **caractérisé en ce que** le boîtier du module (12) présente une paroi extérieure comprenant une courbure, la courbure étant adaptée à une géométrie d'une cabine d'aéronef (2) de l'aéronef (1) .

12. Aéronef (1) comprenant une cabine d'aéronef (2), la cabine d'aéronef (2) présentant une zone de couloir (4) et au moins une zone de porte (5), **caractérisé par** un module intégré (10) selon l'une quelconque des revendications précédentes, le module intégré (10) étant agencé de manière adjacente à la zone de porte (5) dans la cabine d'aéronef (2).

13. Aéronef (1) selon la revendication 12, **caractérisé en ce que**, dans la position d'ouverture (O1) de la porte de module (13), l'espace de couchage (14) est relié dans l'espace à la zone de porte (5), la couchette (16) étant agencée dans la position allongée (L) avec la surface d'allongement (A3) par sections dans la zone de porte (5).

14. Aéronef (1) selon la revendication 12 ou 13, **caractérisé en ce que**, dans la position d'ouverture (O1) de la porte de module (13), la zone de porte (5), est délimitée dans l'espace par rapport à la zone de couloir (4) par la porte de module (13) et **en ce que**, dans la position de fermeture (S) de la porte de module (13), la zone de porte (5) est reliée dans l'espace à la zone de couloir (4).

15. Aéronef (1) selon la revendication 14, **caractérisé par** un composant de cabine (18), la zone de porte (5) étant délimitée dans une direction longitudinale de l'aéronef d'une part par le module intégré (10) et d'autre part par le composant de cabine (18), la porte de module (13) étant fermée et/ou en prise avec le composant de cabine (18) dans la position d'ouverture (O1) pour délimiter la zone de couloir (4).
